# EUROPÄISCHE PATENTANMELDUNG

(11) **EP 1 059 552 A1**
(43) Veröffentlichungstag der Anmeldung: **13.12.2000**
(21) Anmeldenummer: 00890181.1
(22) Anmeldetag: 02.06.2000
(51) Int. Cl.: G02C 5/22

(54) **Scharniergelenk zwischen einem Bügel und einem Bügelbacken einer Brille**

(30) Priorität: 07.06.1999 AT 100699
(71) Anmelder: Simon Redtenbacher seel. Wwe. & Söhne GmbH & Co. KG, 4644 Scharnstein (AT)
(72) Erfinder: Maier, Manfred, 4644 Scharnstein (AT)
(74) Vertreter: Hübscher, Gerhard, Dipl.-Ing.

(57) **Zusammenfassung**

Es wird ein Scharniergelenk zwischen einem Bügel (1) und einem Bügelbacken (3) einer Brille mit zwei Scharnierteilen (2, 4) beschrieben, die einerseits eine Scharnierachse (5) und anderseits eine Aufnahme (6) für die in der Aufnahme (6) federnd abgestützte Scharnierachse (5) bilden. Um vorteilhafte Konstruktionsbedingungen zu schaffen, wird vorgeschlagen, daß der die Aufnahme (6) bildende Scharnierteil (2) eine quer zur Scharnierachse (5) verlaufende Einstecköffnung (7) für einen gegen Federkraft einführbaren, mit einer Durchtrittsbohrung (10) für die Scharnierachse (5) versehenen Einsatz (9) aufweist.

## Beschreibung

Die Erfindung bezieht sich auf ein Scharniergelenk zwischen einem Bügel und einem Bügelbacken einer Brille mit zwei Scharnierteilen, die einerseits eine Scharnierachse und anderseits eine Aufnahme für die in der Aufnahme federnd abgestützte Scharnierachse bilden.

Um ein schraubenloses Scharniergelenk zwischen einem Bügel und einem Bügelbacken einer Brille so auszugestalten, daß einerseits eine sichere Bügelanlenkung und anderseits eine von Fertigungstoleranzen unabhängige Gängigkeit des Scharniergelenkes gewährleistet werden kann, ist es bekannt (AT 404 193 B), die Lagerachse als einen dem einen Scharnierteil zugeordneten Hammerkopf auszubilden, der mit der im anderen Scharnierteil vorgesehenen Aufnahme für die Lagerachse einen Bajonettverschluß bildet, wobei durch eine axiale Vorspannung eines Federkörpers zwischen den beiden Scharnierteilen nicht nur ein Toleranzausgleich erreicht, sondern auch eine entsprechende Gängigkeit des Scharniers über die axiale Federbelastung der beiden Scharnierteile sichergestellt werden kann. Ein solches Scharniergelenk erfordert jedoch eine entsprechende axiale Baulänge, insbesondere bei vorteilhaften Federkennlinien für den Federkörper zwischen den beiden Scharnierteilen. Außerdem ist mit einem vergrößerten Fertigungsaufwand zufolge des bajonettartigen Verschlusses zu rechnen, wozu noch kommt, daß in der Offenstellung des Verschlusses die beiden Scharnierteile durch die vorgespannte Feder zwischen ihnen auseinandergedrückt werden.

Der Erfindung liegt somit die Aufgabe zugrunde, ein Scharniergelenk zwischen einem Bügel und einem Bügelbacken einer Brille der eingangs geschilderten Art so auszugestalten, daß mit einfachen konstruktiven Mitteln die Baulänge in Richtung der Gelenkachse kleingehalten werden kann, ohne auf eine vorteilhafte, durch eine Federbelastung bedingte Gängigkeit verzichten zu müssen.

Die Erfindung löst die gestellte Aufgabe dadurch, daß der die Aufnahme bildende Scharnierteil eine quer zur Scharnierachse verlaufende Einstecköffnung für einen gegen Federkraft einführbaren, mit einer Durchtrittsbohrung für die Scharnierachse versehenen Einsatz aufweist.

Da zufolge dieser Maßnahmen die Halterung der Scharnierachse in ihrer Aufnahme durch einen federbelasteten Einsatz erfolgt, der in eine quer zur Scharnierachse verlaufende Einstecköffnung des die Aufnahme bildenden Scharnierteiles eingreift, ist die Baulänge des Scharniers in Richtung der Scharnierachse unabhängig von der in Einsteckrichtung gemessenen Länge des Einsatzes und der Einstecköffnung, so daß die Einstecköffnung zur Aufnahme der Belastungsfeder und des Einsatzes eine ausreichende Länge aufweisen kann. Die Baulänge des Scharniergelenkes in Richtung der Gelenkachse wird somit im wesentlichen durch die Abmessungen des die Aufnahme bildenden Scharnierteiles quer zur Einstecköffnung bestimmt, was zu kleinen Baulängen führt, weil der die Aufnahme für die Scharnierachse bildende Scharnierteil nur einen geringfügig dickeren Außendurchmesser als der Einsatz aufweisen muß. Da die Scharnierachse nicht nur den Einsatz in einer Durchtrittsbohrung, sondern auch die Einstecköffnung für den Einsatz durchsetzt, wird die Scharnierachse durch den federbelasteten Einsatz in radialer Richtung gegen die Aufnahmeöffnungen beidseits des Einsatzes gedrückt. Dies gewährleistet einerseits eine spielfreie Lagerung der Scharnierachse und bringt anderseits eine über die Vorspannung der Belastungsfeder des Einsatzes vorgebbare Scharniergängigkeit mit sich. Darüber hinaus werden einfache Montageverhältnisse geschaffen, weil nach dem Einsetzen der Feder und des Einsatzes in die Einstecköffnung des einen Scharnierteiles nur die Scharnierachse des anderen Schamierteiles durch die mit der Durchtrittsbohrung für die Scharnierachse fluchtende Aufnahme einzuführen ist.

Zur axialen Festlegung der Scharnierachse im die Aufnahme bildenden Scharnierteil können verschiedene konstruktive Maßnahmen vorgesehen werden. Besonders einfache Konstruktionsbedingungen ergeben sich allerdings, wenn die Scharnierachse im Bereich der Durchtrittsbohrung des Einsatzes mit einem im Durchmesser verringerten Absatz ausgebildet ist, weil in diesem Fall der Einsatz selbst die axiale Sicherung der Scharnierachse übernehmen kann, wenn er über seine Federbelastung in den im Durchmesser verringerten Absatz der Scharnierachse eingreift.

Weist der Einsatz einen über die Einstecköffnung vorstehenden Kopf auf, so kann nicht nur der Zusammenbau, sondern auch das Zerlegen des Scharniergelenkes ohne Hilfsmittel durchgeführt werden, weil lediglich der Einsatz entgegen der Federkraft über den vorstehenden Kopf in die Einstecköffnung eingedrückt zu werden braucht, bis die mit der Aufnahme fluchtende Durchtrittsbohrung des Einsatzes ein freies Einführen der Scharnierachse in die Aufnahme bzw. ein freies Ausziehen der Scharnierachse erlaubt.

Die die Aufnahme und den Einsatz durchsetzende Scharnierachse findet naturgemäß in der Aufnahme keinen Drehanschlag, wenn hiefür nicht besondere Maßnahmen getroffen werden, die jedoch den Konstruktionsaufwand vergrößern. Aus diesem Grunde empfiehlt es sich, den die Scharnierachse bildenden Scharnierteil als mit dem anderen Scharnierteil als Gegenanschlag zusammenwirkenden Drehanschlag für das Scharniergelenk auszubilden.

Die Federbelastung des Einsatzes kann auch vorteilhaft für eine federnde Verrastung des Scharniergelenkes in der Ruhe- und der Gebrauchsstellung des Bügels ausgenützt werden, wenn die Scharnierachse zwei mit einer abgeflachten Anschlagfläche der Durchtrittsbohrung zusammenwirkende, entsprechend der Ruhe- und der Gebrauchsstellung des Bügels angeordnete Abflachungen aufweist. Wird die abgeflachte Anschlagfläche im Bereich der Durchtrittsbohrung des Einsatzes gegen eine der beiden Abflachungen der Scharnierachse angedrückt, so bedarf es zur Drehverstellung der Scharnierachse eines entsprechenden Drehmomentes, um den Einsatz zufolge der Exzentrizität der Abflachung gegen die Federkraft zur Freigabe der Scharnierachse für die Drehbewegung verschieben zu können. Gelangt eine der Abflachungen der Scharnierachse bei einer Drehbewegung des Bügels in den Bereich der abgeflachten Anschlagfläche des Einsatzes, so wird auf den Bügel über die Scharnierachse ein Drehmoment ausgeübt, das das Scharniergelenk in die Anschlagstellung drückt. Die wirksamen Drehmomente hängen dabei von der Federbelastung des Einsatzes und von der Exzentrizität der Abflachungen ab.

In der Zeichnung ist der Erfindungsgegenstand beispielsweise dargestellt. Es zeigen
Fig. 1 ein erfindungsgemäßes Scharniergelenk zwischen einem Bügel und einem Bügelbacken einer Brille in einer schematischen Seitenansicht,
Fig. 2 dieses Scharniergelenk in einem schematischen Axialschnitt in einem größeren Maßstab und
Fig. 3 einen Schnitt nach der Linie III-III der Fig. 2.

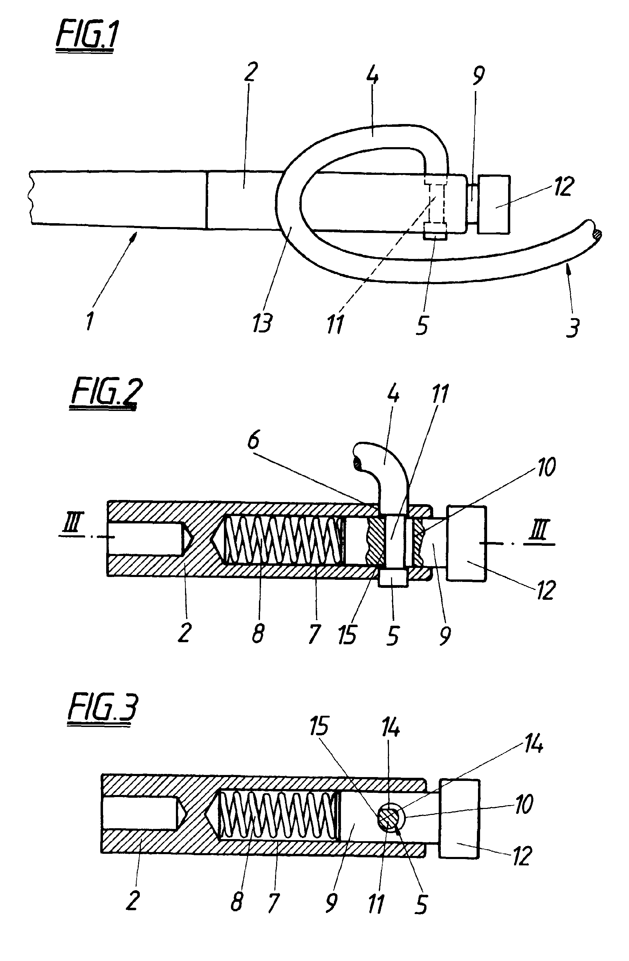

Gemäß dem dargestellten Ausführungsbeispiel bildet der Brillenbügel 1 mit einem vorderen Endstück den einen Scharnierteil 2, während der aus Draht geformte Bügelbacken 3 den anderen Scharnierteil 4 darstellt, der die Scharnierachse 5 trägt. Diese Scharnierachse 5 durchsetzt den Scharnierteil 2 in einer eine Aufnahme 6 bildenden Bohrung, wie dies der Fig. 2 entnommen werden kann. Der Scharnierteil 2 weist außerdem eine quer zur Scharnierachse 5 verlaufende Einstecköffnung 7 auf, die im Ausführungsbeispiel durch eine Sacklochbohrung gebildet wird. In diese Einstecköffnung 7 ist eine Druckfeder 8 eingesetzt, die mit Hilfe eines Einsatzes 9 unter Vorspannung gehalten wird. Der Einsatz 9 ist mit einer Durchtrittsbohrung 10 für die Scharnierachse 5 versehen, die demnach den Einsatz 9 in der Einstecköffnung 7 festhält. Da die Scharnierachse 5 im Bereich der Durchtrittsbohrung 10 einen hinsichtlich des Durchmessers verringerten Absatz 11 bildet, in den der Einsatz 9 eingreift, stellt der Einsatz 9 für die Scharnierachse 5 ebenfalls eine axiale Sicherung dar.

Die Druckfeder 8 drückt den Einsatz 9 radial gegen die Scharnierachse 5, die somit spielfrei an die diametral gegenüberliegenden Bohrungswandungen der Aufnahme 6 angedrückt wird, und zwar mit einer über die Vorspannung der Druckfeder 8 vorgebbaren Kraft, so daß über die Reibkräfte zwischen der Scharnierachse 5 einerseits und den Bohrungswandungen der Aufnahme 6 und der Wandung der Durchtrittsbohrung 10 anderseits eine vorteilhafte Gängigkeit des Scharniergelenkes sichergestellt werden kann. Insbesondere die Reibungsverhältnisse zwischen dem Einsatz 9 und der Scharnierachse 5 können durch eine entsprechende Werkstoffwahl für den Einsatz 9 vorteilhaft beeinflußt werden, der beispielsweise aus Kunststoff gefertigt sein kann.

Zum Lösen der Gelenkverbindung ist der Einsatz 9 über seinen vorstehenden Kopf 12 gegen die Federkraft in die Einstecköffnung 7 einzuschieben, bis sich die Durchtrittsöffnung 10 mit der Aufnahme 6 deckt, so daß die Scharnierachse 5 unbehindert aus dem Scharnierteil 2 herausgezogen werden kann. Zum Montieren des Scharniergelenkes ist in umgekehrter Reihenfolge nach dem Einsetzen der Druckfeder 8 und des Einsatzes 9 die Scharnierachse 5 durch die mit der Aufnahme 6 fluchtende Durchtrittsbohrung 10 durchzustecken, bevor der Kopf 12 entlastet wird, um eine gegenseitige Verriegelung der Scharnierachse 5 und des Einsatzes 9 zu erreichen.

Um einen einfachen Drehanschlag für das Scharniergelenk sicherzustellen, kann der Bügelbacken 3 im Bereich des Scharnierteiles 4 U-förmig gegen den Bügel zurückgebogen werden, wie dies der Fig. 1 entnommen werden kann. Der dadurch gebildete, gegen den Brillenbügel 1 vorragende Bogen 13 stellt einen wirksamen, mit dem Bügel 1 als Gegenanschlag zusammenwirkenden Drehanschlag für das Scharniergelenk sicher.

Wie insbesondere der Fig. 3 entnommen werden kann, kann die Scharnierachse 5 im Bereich des hinsichtlich des Durchmessers verringerten Absatzes 11 zwei quer zueinander verlaufende Abflachungen 14 aufweisen, die mit einer abgeflachten Anschlagfläche 15 im Bereich der Durchtrittsbohrung 10 des Einsatzes 9 für die Scharnierachse 5 zusammenwirken. Da diese abgeflachte Anschlagfläche 15 auf der der Druckfeder 8 zugekehrten Seite der Durchtrittsbohrung 10 vorgesehen ist, wird diese Anschlagfläche 15 gegen die in ihrem Bereich befindliche Abflachung 14 der Scharnierachse 5 angedrückt, womit eine federnde Verrastung der Scharnierachse 5 in dieser Drehstellung verbunden ist. Bei einer entsprechenden Lage der Abflachungen 14 kann somit eine vorteilhafte Verrastung des Bügels 1 in seiner Ruhe- und seiner Gebrauchslage erreicht werden. Aus diesen verrasteten Bügelstellungen ist der Bügel 1 nur unter Überwindung eines entsprechenden Drehmoments zu verschwenken, das von der Kraft der Feder 8 und der Exzentrizität der Abflachungen 14 abhängt, weil ja beim Verdrehen der Scharnierachse 5 der Einsatz 9 im Ausmaß der Exzentrizität der Abflachungen 14 gegen die Federkraft 8 verschoben werden muß.

## Patentansprüche

1. Scharniergelenk zwischen einem Bügel (1) und einem Bügelbacken (3) einer Brille mit zwei Scharnierteilen (2, 4), die einerseits eine Scharnierachse (5) und anderseits eine Aufnahme (6) für die in der Aufnahme (6) federnd abgestützte Scharnierachse (5) bilden, dadurch gekennzeichnet, daß der die Aufnahme (6) bildende Scharnierteil (2) eine quer zur Scharnierachse (5) verlaufende Einstecköffnung (7) für einen gegen Federkraft einführbaren, mit einer Durchtrittsbohrung (10) für die Scharnierachse (5) versehenen Einsatz (9) aufweist.

2. Scharniergelenk nach Anspruch 1, dadurch gekennzeichnet, daß die Scharnierachse (5) im Bereich der Durchtrittsbohrung (10) des Einsatzes (9) mit einem im Durchmesser verringerten Absatz (11) ausgebildet ist.

3. Scharniergelenk nach Anspruch 1 oder 2, dadurch gekennzeichnet, daß der Einsatz (9) einen über die Einstecköffnung (7) vorstehenden Kopf (12) bildet.

4. Scharniergelenk nach einem der Ansprüche 1 bis 3, dadurch gekennzeichnet, daß der die Scharnierachse (5) bildende Scharnierteil (4) einen mit dem anderen Scharnierteil (2) als Gegenanschlag zusammenwirkenden Drehanschlag für das Scharniergelenk bildet.

5. Scharniergelenk nach einem der Ansprüche 1 bis 4, dadurch gekennzeichnet, daß die Scharnierachse (5) zwei mit einer abgeflachten Anschlagfläche (15) der Durchtrittsbohrung (10) zusammenwirkende entsprechend der Ruhe- und der Gebrauchsstellung des Bügels (1) angeordnete Abflachungen (14) aufweist.
